# EUROPÄISCHE PATENTSCHRIFT

(11) **EP 0 721 861 B1**
(45) Veröffentlichungstag und Bekanntmachung des Hinweises auf die Patenterteilung: **21.06.2000**
(21) Anmeldenummer: 95120538.4
(22) Anmeldetag: 27.12.1995
(51) Int. Cl.: B60R 13/02, F16B 5/00

(54) **Karosserieverkleidung**
Coachwork lining
Garnissage de carrosserie

(30) Priorität: 12.01.1995 DE 19500641; 30.11.1995 DE 19544668
(43) Veröffentlichungstag der Anmeldung: 17.07.1996
(73) Patentinhaber: BAYER AG, 51368 Leverkusen (DE); Micro Compact Car smart GmbH, 71272 Renningen (DE)
(72) Erfinder: Goldbach, Hubert, D-40882 Ratingen (DE); Koch, Boris, D-42929 Wermelskirchen (DE); Malek, Thomas, D-50259 Pulheim (DE); Marold, Adolf, 71034 Böblingen (DE); Pothoven, Alexander, 71287 Weissach/Flacht (DE); Freischläger, Ralf, 71229Leonberg (DE)

(56) Entgegenhaltungen:
- US-A- 1 764 668
- US-A- 1 960 949
- US-A- 2 466 190
- US-A- 5 090 762
- US-A- 5 111 619

## Beschreibung

Die Erfindung betrifft eine demontierbare Karosserieverkleidung, insbesondere ein System zur Befestigung von Karosserieflächen und Verkleidungsteilen - nachfolgend als Beplankung bezeichnet -, die tragende Unterkonstruktionen (Tragestrukturen) von Fahrzeugen verkleidet. Die Beplankung kann insbesondere bei der großserientechnischen Montage bzw. Demontage von Karosserieverkleidungen von Fahrzeugen eingesetzt werden. Die Beplankung kompensiert Fertigungstoleranzen und/oder Maßänderungen durch Temperaturschwankungen, die bei der Beplankung von Tragstrukturen zu berücksichtigen sind.

Bei der Befestigung von Beplankungen auf einer tragenden Unterkonstruktion mit einem stark unterschiedlichen thermischen Ausdehnungsverhalten von Beplankung und Unterkonstruktion zueinander sind derzeit folgende Lösungen bekannt:
1. Befestigung der Beplankung durch eine Schraubverbindung mit Langlöchern an der Beplankung. Diese ermöglichen eine Ausdehnung der Beplankung in einer Richtung.
2. Die Befestigung der Beplankung erfolgt durch Gleitlager, die durch eine Schraub- oder Nietverbindung an der Tragestruktur gehalten werden und mit einem entsprechenden Gegenlager in der Beplankung einen Gleitsitz ergeben: Dieses ermöglicht eine Ausdehnungsfreiheit der Beplankung in einer Dimension, durch Doppellager in zwei Dimensionen.
3. Die Befestigung der Beplankung durch in die Beplankung integrierte Gewindebolzen mit Langlochflanschen in der Unterkonstruktion. Diese Befestigungsart ermöglicht eine Ausdehnungsfreiheit der Beplankung in einer Dimension.
4. Die Befestigung der Beplankung durch eine feste Schraubverbindung über integrierte Biegeflansche an der Beplankung. Diese ermöglicht eine Ausdehnungsfreiheit der Beplankung ebenfalls in einer Dimension.

Alle genannten Befestigungssysteme erfordern eine zusätzliche Abdichtung zwischen Beplankung und Tragestruktur, um eine Spritzwasser- bzw. Staubdichtigkeit zu erreichen und um die Entstehung von Klapper- oder Knarrgeräuschen zwischen Beplankung und Tragestruktur zu vermeiden.

Die deutsche Patentschrift DE 39 35 857 C1 beschreibt eine Kraftfahrzeugtür bei der auf einem tragenden Grundkörper ein Türblatt befestigt ist, in dem ein korrespondierendes Ränderpaar von Türblatt und Grundkörper Nuten aufweist, die zueinander öffnen und durch einen Profilstreifen miteinander verbunden sind. Diese Karosserieverkleidung ermöglicht eine lösbare Verbindung zwischen Grundkörper und Türblatt.

Nachteilig ist bei dieser Karossieverkleidung, daß bei einem Erwärmen des Türblattes gegenüber dem Grundkörper aufgrund z.B. unterschiedlicher Wärmeausdehnung der Materialien die Festigkeit der Verbindung nicht mehr ausreichend ist, beispielsweise gegenüber unerwünschter Demontage. Die Einbruchsicherheit von Kraftfahrzeugen ist damit unter Umständen nicht mehr gewährleistet.

Der Erfindung liegt die Aufgabe zugrunde, eine Karossereiverkleidung zu entwickeln, mit dem steife Unterkonstruktionen mit großflächiger Beplankung verkleidet werden. Das System sollte einfach in der Handhabung und in der Produktion wirtschaftlich zu montieren und demontieren sein. Wichtige Kriterien sind Einbruchsicherheit, Dichtigkeit sowie das Vermeiden von Knarrund Klappergeräuschen. Die Karosserieverkleidung darf keine sichtbaren Markierungen auf der Sichtfläche der Beplankung verursachen.

Die Aufgabe wird erfindungsgemäß gelöst durch eine Karosserieverkleidung, bestehend aus mindestens einer Beplankung und einer Tragestruktur, bei der die Beplankung an ihrer Umfangskante Falzkanten aufweist, die über Befestigungskanten der Tragestruktur greifen und als Nut-Feder-Kombination mit einem zwischenliegenden Profil eine Verbindung bilden, dadurch gekennzeichnet, daß die Türbeplankung vier zusätzliche gegenüberliegende Befestigungsverbindungen aufweist, die jeweils eine Bewegung der Beplankung in einer von zwei Richtungen (x oder z) zulassen, wobei an jeder Beplankungsseite ein Befestigungspunkt vorgesehen ist.

Weitere bevorzugts Ausführungsformen sind den Unteransprüchen zu entnehmen.

Die erfindungsgemäße Verkleidung läßt bei vier zusätzlichen Befestigungsverbindungen eine unbehinderte Längenausdehnung Δ L der Beplankung in zwei Dimensionen (hier als x- und z-Richtung bezeichnet) zu, fixiert die Beplankung aber in der dritten Dimension (hier als y-Richtung bezeichnet) über die Gesamtlänge des Umfangs durchgängig.

In einer bevorzugten Ausführung ist die Beplankung über vier zusätzliche - pro Beplankungsseite einen - Befestigungspunkte in ihrer Lage zur Tragestruktur eindeutig fixiert. Die Befestigungsverbindungen sind dabei so ausgeführt, daß ein Paar Befestigungsverbindungen in z-, y-Richtung fest, aber in x-Richtung beweglich und ein Paar in x-, y-Richtung fest aber in z-Richtung beweglich gestaltet ist, so daß ein imaginärer absoluter Fixpunkt in der Beplankungsmitte resultiert.

Mit dem entwickelten Befestigungssystem der Beplankung werden gegenüber dem Stand der Technik folgende Vorteile erzielt:
Durch die besondere konstruktive Gestaltung der Beplankungsumfangskanten und des Zusatzprofils wird eine einfachere Handhabung bei Montage bzw. Demontage der Beplankung erreicht. Insbesondere durch den Einsatz von nur einem Sicherungsprofil oder gegebenenfalls zwei Sicherungsprofilen, wird eine kürzere Montage- bzw. Demontagezeit benötigt. Die Befestigung erfordert keine Zusatzwerkzeuge bei der Montage bzw. Demontage. Die Konstruktion ist besonders platzsparend und garantiert eine spielfreie Verbindung der Beplankung über die Gesamtlänge der Umfangskanten, was eine verbesserte Einbruchsicherheit, Staubund Spritzwasserdichtigkeit und eine gleichmäßige Kraftverteilung auf die Beplankungsfläche zur Folge hat.

Der wesentliche Vorteil der erfindungsgemäßen Karosserieverkleidung ist die Möglichkeit der freien Ausdehnung der Beplankung in zwei Dimensionen. Die daraus resultierenden äußerst niedrigen Bauteilspannungen bei extrem niedriger bzw. erhöhter Temperatur (-30 bis +150°C) sind die denkbar besten Voraussetzungen um Verwerfungen der Beplankungsoberfläche zu vermeiden.

Des weiteren ergeben sich bei der bevorzugten Verkleidung durch den imaginären Befestigungspunkt zur Tragestruktur auf der Flächenmitte der Beplankung zwei weitere Vorteile:

Die Längenausdehnung der Beplankung verteilt sich gleichmäßig auf alle Anschlußfugen.

Ein Verdrehen der Beplankung in bezug auf die Unterkonstruktion ist ausgeschlossen. Dies garantiert stets ein gleichmäßiges Fugenbild.

Zur Herstellung der Umfangskanten der Beplankung sowie der Tragestruktur eignen sich die im Prinzip bekannten Verfahren: Pressen, Tiefziehen, Fließpressen, Spritzgießen, je nachdem, welcher Werkstoff für die Beplankung bzw. für die Tragestruktur verwendet wird.

Die zwischenliegenden Befestigungsprofile sind je nach Werkstoff nach dem Extrusions- oder dem Spritzgießverfahren herstellbar.

Als Material zur Herstellung der Beplankung insbesondere mit einer integrierten Befestigung an den Umfangskanten sind ziehfähige Bleche aus Stahl oder Aluminium sowie Formteile aus duroplastischen bzw. thermoplastischen Kunststoffen geeignet. Als Basismaterial des oder der Zusatzprofile eignen sich thermoplastische Kunststoffe, Elastomere, Kautschuk oder Silikone.

Die erfindungsgemäße Karosserieverkleidung eignet sich grundsätzlich für alle Arten von Karosserieabdeckungen, insbesondere für die Beplankung von Karosseriestrukturen von Personenkraftwagen oder Lastkraftwagen.

Die Erfindung wird anhand der Figuren nachstehend beispielhaft näher erläutert. Es zeigen
- Fig. 1 a bis d: Skizzen zur Erläuterung der Montage einer Ausführungsform der erfindungsgemäßen Beplankung (Kfz-Tür)
- Fig. 2: einen Schnitt durch eine Befestigungskante eines erfindungsgemäßen Karosserieteiles
- Fig. 3a und b: einen Schnitt durch die Beplankung nach Fig. 1d entsprechend der Linie B-B bei unterschiedlicher thermischer Längenausdehnung Δ L der Beplankung
- Fig. 4: schematische Darstellung einer Befestigungsmöglichkeit einer Beplankung nach Fig. 1d zur Erläuterung des imaginären Befestigungspunktes

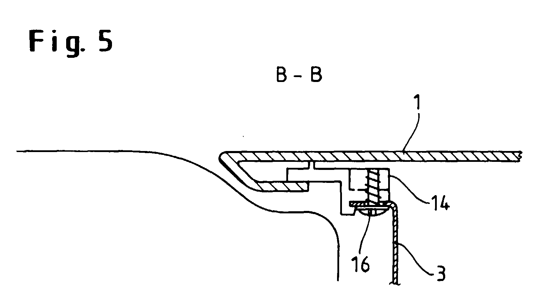

- Fig. 5: Variante der Verbindung zwischen Tragestruktur, Profil und Planke entsprechend einem Schnitt B-B in Fig. 1d

### Beispiele

Im folgenden wird die erfindungsgemäße Karosserieverkleidung anhand von demontierbaren Karosserieflächen einer Kraftfahrzeugtürbeplankung gezeigt. Das nachfolgende Befestigungssystem kann unter Berücksichtigung der Fügerichtung und der Designvorgaben auf eine Vielzahl von Karosserieflächen (z.B. Kofferraumdeckel, Heckklappen, Kfz-Dächer) oder z.B. auf die Außenverkleidung von Elektrogeräten übertragen werden.

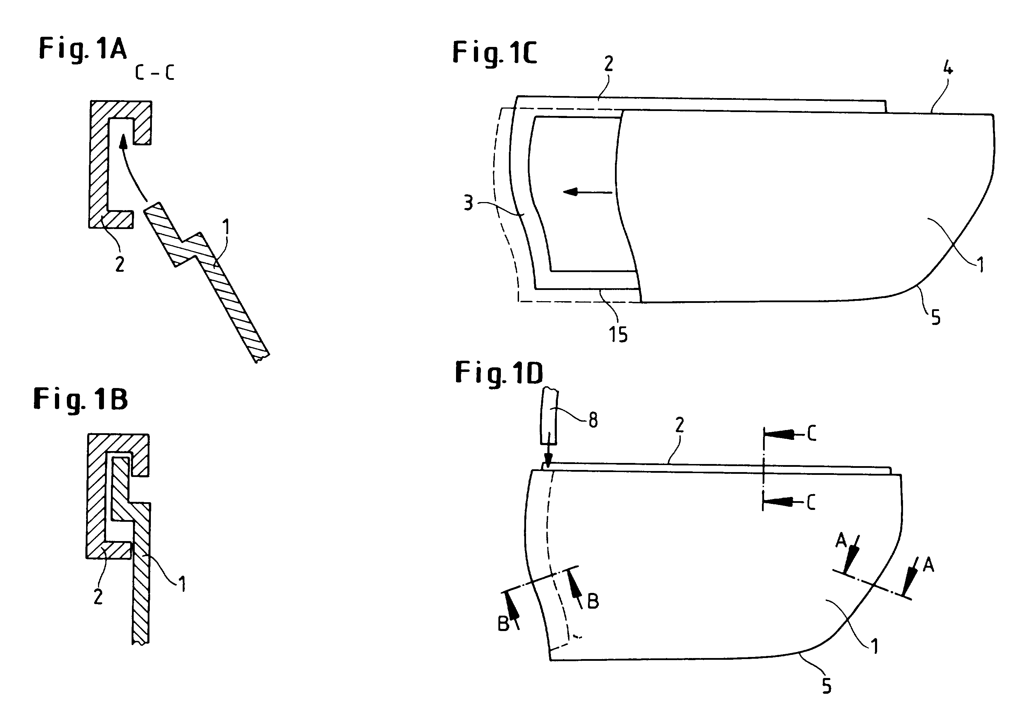

In den Zeichnungen 1a bis d der Fig. 1 ist der Montageablauf chronologisch skiziiert. Die Türbeplankung 1 wird unter einem Winkel (Fig. 1a; Schnitt entsprechend Linie C-C in Figur 1c) mit der Oberkante 4 in eine Profilschiene 2 eingesteckt, die mit der Tragestruktur 3 verbunden ist und danach an die Tragestruktur 3 herangeklappt (siehe Fig. 1b) oder über die gesamte Länge seitlich eingeschoben (siehe Fig. 1c).

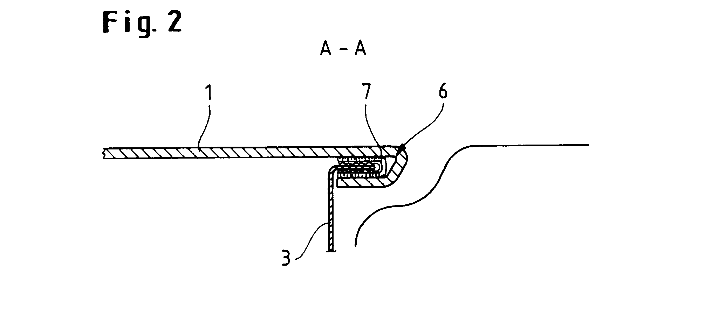

Die Verbindung der Oberkante 4 der Türbeplankung 1 mit der Profilschiene 2 ermöglicht ein Verschieben der Türbeplankung 1 in Längsrichtung. Das Verschieben der Türbeplankung 1 (siehe Fig. 1d) wird solange durchgeführt, bis die Unterkante 5 der Beplankung mit dem Hinterschnitt 6 (siehe Fig. 2) auf der Unterstruktur 3 verbunden ist, die zuvor mit einem Profilgummi 7 bestückt wurde.

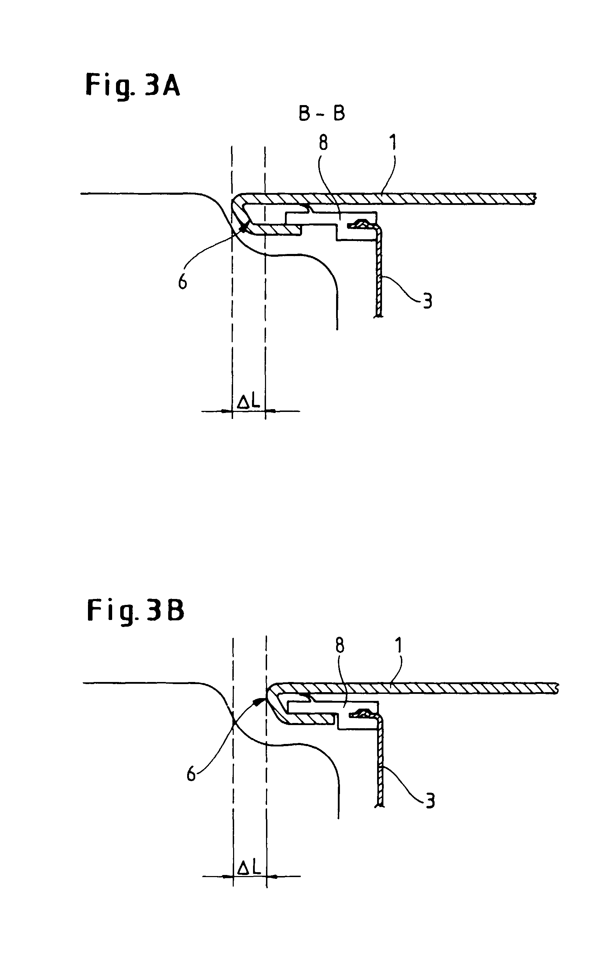

Danach wird eine weitere flexible Sicherungsprofilleiste 8 (siehe Fig. 1d) von oben zwischen Hinterschnitt 6 und Tragestruktur 3 geschoben (siehe Fig. 3), so daß die kompletten Umfangskanten der Türbeplankung schwimmend auf der Tragestruktur 3 befestigt sind und somit die gewünschte Spielfreiheit, Dichtheit, Einbruchsicherheit und Kompensation von thermischer Längenausdehnung Δ L damit gewährleistet sind.

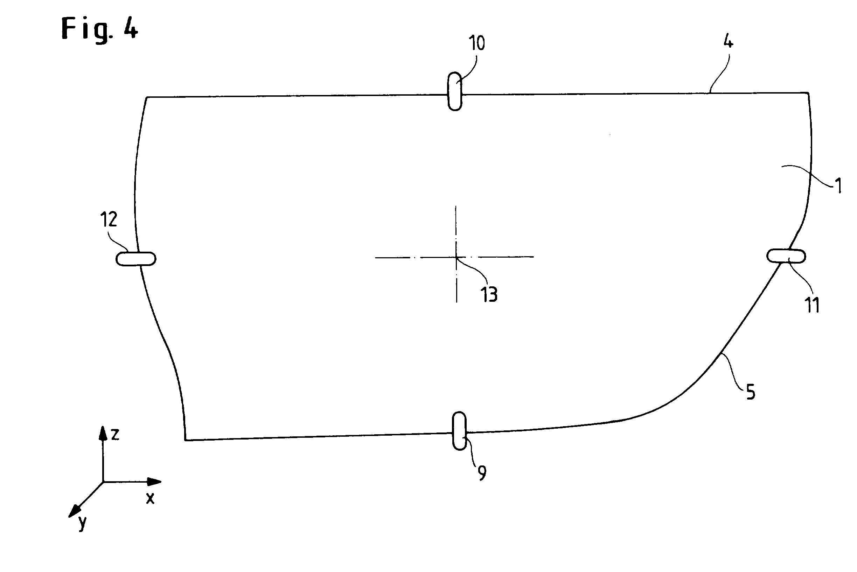

Um ein unkontrolliertes Ausdehnen in unterschiedliche Richtungen oder ein Verdrehen der Türbeplankung 1 auf der Unterstruktur 3 zu unterbinden, wird die Türbeplankung 1 zusätzlich an vier weiteren Punkten (siehe z.B. Fig. 4) konventionell befestigt (z.B. mit Schrauben, Schnappern, Nieten, Zentrierrippen). Bei diesen vier zusätzlichen Befestigungsverbindungen wird jeweils eine Bewegung in einer von zwei Richtungen (x oder z) zugelassen.

Dies wird durch Langlöcher 9, 10, 11, 12 erreicht, welche die freie Bewegungsrichtung vorgeben. Damit ist gewährleistet, daß sich die Türbeplankung nicht unkontrolliert auf der Unterstruktur 3 verschieben kann und einen imaginären Befestigungspunkt 13 in der Mitte der Fläche besitzt. Der imaginäre Befestigungspunkt 13 kann je nach Lage der Langlöcher 9, 10, 11, 12 wahlweise auf einer beliebigen Stelle der Beplankungsfläche positioniert werden.

In Abwandlung zur extrudierten, flexiblen Profilleiste 8 kann ebenfalls ein spritzgegossenes Profil 14 eingesetzt werden, das zuvor in den Hinterschnitt 6 eingelegt wird und nach Erreichen der Endposition der Türbeplankung 1 (siehe z.B. Fig. 1e) auf der Unterstruktur 3 befestigt wird (z.B. mit Schrauben 16, Schnapper etc.).

## Patentansprüche

1. Karosserieverkleidung, bestehend aus mindestens einer Beplankung (1) und einer Tragestruktur (3), bei der die Beplankung (1) an ihrer Umfangskante Falzkanten (6) aufweist, die über Befestigungskanten (15) der Tragestruktur (3) greifen und als Nut-Feder-Kombination mit einem zwischenliegenden Profil (7) eine Verbindung bilden, dadurch gekennzeichnet, daß die Türbeplankung (1) vier zusätzliche gegenüberliegende Befestigungsverbindungen aufweist, die jeweils eine Bewegung der Beplankung in einer von zwei Richtungen (x oder z) zulassen, wobei an jeder Beplankungsseite ein Befestigungspunkt vorgesehen ist.

2. Karosserieverkleidung gemäß Anspruch 1, dadurch gekennzeichnet, daß die Beplankung (1) an zusätzlichen Stellen der Umfangskante über Zapfenverbindungen fixiert ist.

3. Karosserieverkleidung gemäß Anspruch 1 oder 2, dadurch gekennzeichnet, daß sie vier lösbare Verbindungen aufweist, die jeweils paarweise an gegenüberliegenden Umfangskanten der Beplankung (1) angebracht sind.

4. Karosserieverkleidung nach den Ansprüchen 1 bis 3, dadurch gekennzeichnet, daß ein Profil (8) als einschiebbares elastisches Sicherungsprofil ausgebildet ist.

5. Karosserieverkleidung nach den Ansprüchen 1 bis 4, dadurch gekennzeichnet, daß die Profile (7) die Beplankung (1) und Tragestruktur (3) spritzwasserdicht und ausdehnungsfrei miteinander verbinden.

6. Karosserieverkleidung nach den Ansprüchen 1 bis 5, dadurch gekennzeichnet, daß als Material für die Beplankung (1) bzw. für die Tragestruktur (3) Bleche aus Stahl oder Aluminium oder duroplastische und/oder thermoplastische flächige Kunststoff-Formteile verwendet werden.

7. Verwendung der Karosserieverkleidung nach den Ansprüchen 1 bis 6 zur Verkleidung von Kraftfahrzeugen, insbesondere Personenkraftwagen und Lastkraftwagen.

## Claims

1. Body trim, comprising at least one planking (1) and one supporting structure (3), wherein the planking (1) at its peripheral edge has folded edges (6), which engage over fastening edges (15) of the supporting structure (3) and as a tongue-and-groove combination with an interlying profile (7) form a connection, characterized in that the door planking (1) has four additional opposite-lying fastening connections, each of which allows a movement of the planking in one of two directions (x or z), wherein a fastening point is provided at each planking side.

2. Body trim according to claim 1, characterized in that the planking (1) is fixed at additional points of the peripheral edge by means of pin connections.

3. Body trim according to claim 1 or 2, characterized in that it comprises four detachable connections which are provided in each case in pairs at opposite peripheral edges of the planking (1).

4. Body trim according to claims 1 to 3, characterized in that a profile (8) is designed as an insertable flexible securing profile.

5. Body trim according to claims 1 to 4, characterized in that the profiles (7) connect the planking (1) and supporting structure (3) to one another in a splashproof and expansion-free manner.

6. Body trim according to claims 1 to 5, characterized in that as material for the planking (1) and/or for the supporting structure (3) sheets of steel or aluminium or pressure setting and/or thermosetting two-dimensional shaped plastic parts are used.

7. Use of the body trim according to claims 1 to 6 for lining motor vehicles, in particular cars and lorries.

## Revendications

1. Habillage de carrosserie, constitué d'au moins un recouvrement (1) d'une structure support (3), dans le cas duquel le recouvrement (1) présente, sur son bord périphérique, des bords repliés (6) qui viennent en prise par dessus les bords de fixation (15) de la structure support (3) et forment une liaison du type rainure et languette avec un profilé intermédiaire (7), caractérisé par le fait que le recouvrement de porte (1) présente quatre liaisons de fixation supplémentaires situées l'une en face de l'autre qui autorisent chacune un mouvement du recouvrement dans l'une de deux directions (x ou z), un point de fixation étant prévu sur chaque face du recouvrement.

2. Habillage de carrosserie selon la revendication 1, caractérisé par le fait que le recouvrement (1) est fixé, par des liaisons par tenon, en des endroits supplémentaires du bord périphérique.

3. Habillage de carrosserie selon la revendication 1 ou 2, caractérisé par le fait qu'il présente quatre liaisons détachables qui sont respectivement disposées par paire, sur les bords périphériques opposés du recouvrement (1).

4. Habillage de carrosserie selon les revendications 1 à 3, caractérisé par le fait qu'un profilé (8) est conçu sous forme de profilé de sécurité élastique enfilable.

5. Habillage de carrosserie selon les revendications 1 à 4, caractérisé par le fait que les profilés (7), le recouvrement (1) et la structure support (3) sont reliés l'un à l'autre avec étanchéité aux projections d'eau et avec liberté de dilatation.

6. Habillage de carrosserie selon les revendications 1 à 5, caractérisé par le fait que comme matériau pour le recouvrement (1) ou par la structure support (3), on emploie des tôles d'acier ou d'aluminium ou des pièces moulées de plastique plates thermodurcissables et/ou thermoplastiques.

7. Emploi de l'habillage de carrosserie selon les revendications 1 à 6, pour habiller des véhicules à moteur, en particulier des voitures de tourisme et des véhicules utilitaires.
